# EUROPEAN PATENT SPECIFICATION

(11) **EP 2 610 555 B1**
(45) Date of publication and mention of the grant of the patent: **14.12.2016**
(21) Application number: 12199420.6
(22) Date of filing: 27.12.2012
(51) Int. Cl.: F24C 15/20, B01D 46/00

(54) **Hood with a grease filter**
Dunstabzugshaube mit einem Fettfilter
Hotte de cuisinière avec un filtre à graisse

(30) Priority: 29.12.2011 IT TO20111225; 29.12.2011 IT TO20111226; 29.12.2011 IT TO20111227
(43) Date of publication of application: 03.07.2013
(73) Proprietor: Indesit Company S.p.A., 60044 Fabriano (AN) (IT)
(72) Inventor: Graziosi, Serena, I-60021 Camerano (AN) (IT); Speciale, Michele, I-60044 Fabriano (AN) (IT)
(74) Representative: Camolese, Marco

(56) References cited:
- EP-A1- 2 093 506
- EP-A1- 2 290 293
- EP-A2- 2 159 493
- WO-A1-90/11844
- WO-A1-03/084643
- WO-A2-03/072222
- CN-Y- 201 368 511
- DE-A1-102009 002 225
- FR-A1- 2 279 485

## Description

### [TECHNICAL FIELD]

The present invention relates to the field of extraction or recirculating hoods, in particular for treating fumes and odours in household environments, e.g. a range hood.

The invention relates in particular to a grease filter for a hood, as well as to a hood.

### [PRIOR ART]

Aspirating and/or filtering devices are known which are to be installed near places where fumes or odours are generated. For example, such aspirating and/or filtering devices are called "hoods" and are typically installed in household environments, such as a kitchen. Within the context of the present invention, the term "fumes" designates an aeriform substance, typically air, contaminated by suspended liquid, solid or ethereal particles. As far as range hoods are concerned, the aspirated fumes typically transport suspended greasy particles and odours generated by food being cooked.

Some hoods take in fumes from the environment, discharging the aspirated air into a ventilation duct, which then evacuates both fumes and odours out in the open; such hoods are hence referred to as "extraction hoods".

Other hoods collect fumes from the environment, filter them, and then reintroduce the air thus purified into the same environment; hoods of this latter type are referred to as "recirculating hoods".

In both recirculating and extraction hoods, it is known to provide, for fume filtering purposes, mechanical filters having a surface adapted to retain greasy particles while letting the air flow through; the filters are typically cartridges of a filtering material, such as metal mesh, which are secured at the inlet of the hood collector facing the area where fumes are generated, e.g. the burner area in the case of a range hood.

These filters can typically be removed, replaced and washed by the user.

One example of such hoods is known from document EP1340944B1, which describes a hood comprising a plurality of filters arranged at the inlet of the fume collector. In order to maximize the air flow also in the peripheral areas of each filter, the filters described in EP1340944B1 comprise side recesses where the filtering material is thinner than that in the central areas of the filter.

Document EP2290293 (A1) relates to cooking fume exhauster which includes a blower, an oil filter, an enclosure of the exhauster, an oil fume hood and lamp and multi-position key switches The oil filter is consisting of an oil-filter bracket, a primary oil-filter screen, a secondary oil-filter screen and an oil collecting disk.

Document EP2159493 (A2) relates to a vapour extraction device comprising an aerator and a filter element surrounding partly the aerator; the filter element has a grease filter and is downstream of the aerator; the filter element further has an odour filter, which has a discharge opening of the vapour extraction device or is upstream of a discharge opening of the vapour extraction device; the discharge opening surrounds the odour filter.

Document WO2003/072222 (A2) relates to a filter system for extracting particles and/or drops of liquid from the air flowing through the filter device, which consists of a filter layer arranged in a plane and a cyclone collector which is arranged in the edge region of the filter layer.

Document DE102009002225 (A1) relates to a steam guide plate for a filter unit of an extractor hood , having an inlet opening for admission of impurities, ; the inlet opening is arranged above a baffle zone of the plate; the inlet opening lies in a perpendicular projection on a surface of the baffle zone; a suction opening is attached to the vacuuming zone, and is tilted to the baffle zone.

Document EP2093506 (A1) relates to an air purifier having a body casing and a centrifugal fan ; an air purifying filter is arranged so as to be aligned with the centrifugal fan along the direction perpendicular to the rotary shaft of the centrifugal fan.

Document WO9011844 (A1) relates to a device for sucking air containing impurities away from a region, under and near a casing; through a suction opening; a second suction opening is arranged closer to that side wall of the casing which at the bottom is terminated by said edge than the first suction opening; the second suction opening is arranged at a substantial height inside the casing, at least in the upper half of the casing.

Document WO03084643 (A1) relates to a two stage air purification system for the removal of airborne impurities from an airflow, wherein a primary air filter is mounted within the hood to receive grease laden air and remove a portion of the impurities; the air is then sent to a secondary filter that removes additional impurities.

Document FR2279485 (A1) relates to a suction canopy for cooking fumes comprising a chamber and a fan and having inlet and outlet openings; air is drawn through a filter which is disposed beneath the chamber and which consists of walls which slope towards a central collector disposed beneath the outlet opening; at the bottom of the collector is a drain plug forming a sump, while its upper region is provided with slots at the level of the filter and fixer to the bottom of the chamber; the lower wall of the chamber, in the centre of which is provided the outlet opening, is in the form of an inverted dish of which the side walls comprise apertures.

However, these known hood filters suffer from the drawback that they cannot fully exploit their filter elements. In fact, the filters known in the art are highly affected by clogging from airborne greasy particles; such particles deposit onto the filters, and the user must then take action by replacing or cleaning the filters. During these maintenance operations, the user is exposed to the grease deposited on the filter, and runs the risk of getting dirty while handling the filter. Moreover, the dirty part of prior-art filters remains in view, and this may create unpleasant situations in a household environment where the utmost cleanliness is desirable, such as a kitchen.

A further problem suffered by known filters is that their intake capacity, and the resulting load loss, is not uniform in all intake directions, with the addition of sub-optimal space occupation in the hood.

Furthermore, known filters have a total filtering surface that may prove to be insufficient or not properly distributed in the hood.

### [OBJECTS AND SUMMARY OF THE INVENTION]

It is the object of the present invention to overcome some of the problems of the prior art. In particular, it is one object of the present invention to provide a hood with a filter which is less subject to clogging from greasy particles borne by the filtered air, while still having a very good filtering capacity.

It is another object of the present invention to provide a hood wherein the filter stays cleaner in those areas which are typically handled by the user while servicing the hood.

It is a further object of the present invention to provide a hood wherein the areas fouled by greasy particles are not annoying for the user.

It is yet another object of the present invention to provide a hood equipped with a large total filtering surface evenly distributed in the hood.

These and other objects of the present invention are achieved through a hood filter and a hood incorporating the features set out in the appended claims, which are intended to be an integral part of the present description.

One idea is to provide a hood filter comprising:
a first flat filter element adapted to face towards an air inlet of said hood,
a plurality of second flat filter elements arranged along the perimeter of said first filter element to form a side wall, said side wall being adapted to extend externally to said air inlet,
and a third non-filtering closing element connected to said side wall to form a box-like structure.

It is thus possible to create a filter which, while still having compact dimensions, has a large filtering surface that improves its effectiveness; at the same time, the filter offers advantages in terms of cleanliness, in that it is less fouled by deposited grease, and any fouled surfaces are hidden to the user and protected against contact, even accidental contact.

Preferably, the third closing element comprises an outer edge projecting out of said side wall. This advantageously allows to prevent any dirt possibly accumulated on the filter from falling down by gravity, i.e. onto the cooking top in the case of a range hood. Preferably, said filter comprises a frame that supports said side wall and said third closing element. Preferably, said first filter element comprises means for fastening it to said frame, said fastening means being operable to remove said first filter element from said frame. Advantageously, this type of structure allows the filter to be easily removed from the hood for maintenance purposes; due to the first filter element being removable, filter accessibility is improved and the filter can be washed and serviced more easily. Preferably, the third closing element is non-permeable to liquids and gases. Preferably, the third closing element comprises a stainless steel sheet.

Advantageously, a closing element thus designed facilitates the cleaning of the filter, since this surface isolates that filter portion which typically gets fouled and makes it easier to wash the surfaces "in view" even with the filter still mounted in a hood.

Preferably, said first filter element and said second filter elements comprise a metal mesh.

Said filter is installed in a hood, preferably by positioning it upstream of the ventilation means.

One further idea is to provide a hood filter comprising: a first flat circular filter element adapted to face towards an air inlet of said hood; one or more second flat filter elements, having the shape of sectors of a circle, arranged along the perimeter of said first filter element to form a side wall, said side wall being adapted to extend externally to said air inlet; and a third non-filtering closing element connected to said side wall to form a box-like structure.

It is thus possible to create a filter which, while still having compact dimensions, has a large filtering surface that improves its effectiveness; at the same time, the filter offers advantages in terms of cleanliness, in that it is less fouled by deposited grease, and any fouled surfaces are hidden to the user and protected against contact, even accidental contact.

Preferably, the third closing element comprises an outer edge projecting out of said side wall. This advantageously allows to prevent any dirt possibly accumulated on the filter from falling down by gravity, i.e. onto the cooking top in the case of a range hood. Preferably, said filter comprises a frame that supports said side wall and said third closing element. Preferably, said first filter element comprises means for fastening it to said frame, said fastening means being operable to remove said first filter element from said frame. Advantageously, this type of structure allows the filter to be easily removed from the hood for maintenance purposes; due to the first filter element being removable, filter accessibility is improved and the filter can be washed and serviced more easily.

Preferably, the third closing element is non-permeable to liquids and gases. Preferably, the third closing element comprises a stainless steel sheet.

Advantageously, a closing element thus designed facilitates the cleaning of the filter, since this surface isolates that filter portion which typically gets fouled and makes it easier to wash the surfaces "in view" even with the filter still mounted in a hood.

Advantageously, the cylindrical circular shape of said filter ensures optimum uniformity of suction power, and hence of load loss, in all intake directions, as well as optimal space occupation in the hood collector.

Preferably, said first filter element and said second filter elements comprise a metal mesh.

Said filter is installed in a hood, preferably by positioning it upstream of the ventilation means. Said hood may include multiple filters arranged side by side.

Advantageously, the various filters installed in the hood may have different dimensions, in particular different diameter and height, so that they can be better arranged in the hood in accordance with the requirements of improved conveyance effect and less dispersion of the fumes taken in from the outside.

According to the present invention, one idea is to provide a hood according to claim 1.

Preferably, the third closing element comprises an outer edge projecting out of said side wall. This advantageously allows to prevent any dirt possibly accumulated on the filter from falling down by gravity, i.e. onto the cooking top in the case of a range hood. Advantageously, this arrangement of the filters in the hood ensures optimal air intake in all directions.

Advantageously, this type of structure allows the filter to be easily removed from the hood for maintenance purposes; due to the first filter element being removable, filter accessibility is improved and the filter can be washed and serviced more easily. Preferably, the third closing element is non-permeable to liquids and gases. Preferably, the third closing element comprises a stainless steel sheet.

Preferably, the filter elements comprise a metal mesh.

Further objects and advantages of the present invention will become more apparent from the following detailed description and from the annexed drawings.

### [BRIEF DESCRIPTION OF THE DRAWINGS]

Some preferred and advantageous embodiments will now be described by way of non-limiting example with reference to the annexed drawings, wherein:
- Figure 1 shows an example of embodiment of a hood comprising a plurality of filters;
- Figure 2 is a sectional view of the hood of Figure 1;
- Figure 3 shows in detail a first embodiment of one of the filters of Figure 1, in the half-open configuration;
- Figure 4 shows in detail the filter of Figure 3, in the closed configuration;
- Figure 5 exemplifies the flow of air and fumes through the filter of Figure 3 and Figure 4.
- Figure 6 shows a second example of embodiment of a hood comprising a plurality of filters;
- Figure 7 shows in detail a second embodiment of one of the filters of Figure 6, in the half-open configuration;
- Figure 8 shows a third example of embodiment of a hood comprising a plurality of filters;
- Figure 9 shows a fourth example of embodiment of a hood comprising a plurality of filters;
- Figure 10 is a side view of the hood of Figure 8;
- Figure 11 shows in detail an embodiment of one of the filters of Figure 8, in the half-open configuration;
- Figure 12 exemplifies the flow of air and fumes through the filter of Figure 11;
- Figure 13 shows a fifth example of embodiment of a hood comprising a plurality of filters according to the present invention;
- Figure 14 is a sectional view of the hood of Figure 13;
- Figure 15 shows in detail an embodiment of a first type of the filter of Figure 13, in the half-open configuration;
- Figure 16 exemplifies the flow of air and fumes through the filter of Figure 15;
- Figure 17 shows two views, i.e. a perspective view (a) and a bottom view (b), respectively, which illustrate in detail a further embodiment of a filter of Figure 13;
- Figure 18 is a sectional top view of a hood equipped with filters according to the invention.

The drawings show different aspects and embodiments of the present invention and, where appropriate, similar structures, components, materials and/or elements in the various drawings are designated by the same reference numerals.

### [DETAILED DESCRIPTION OF THE INVENTION]

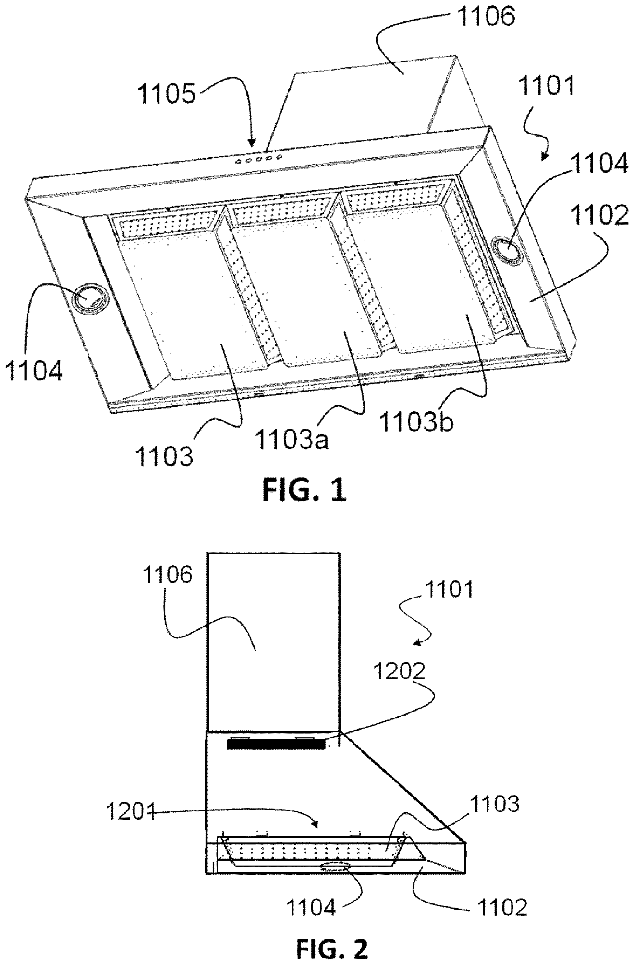

Figure 1 shows a hood 1101. The hood 1101 comprises a fume collector 1102, which houses a plurality of filters 1103, 1103a and 1103b.

In this embodiment, the filters 1103, 1103a, 1103b are all equal, but they may also be different from one another. The filters 1103, 1103a, 1103b are housed each at a respective air inlet (not shown in the drawing) of the hood 1101, i.e. facing towards the area from where air is to be collected, e.g. the burner area in the case of a range hood.

The hood 1101 also comprises lighting devices, such as spotlights 1104, and control means which, through a suitable user interface, control the operation of the hood 1101, such as the control panel 1105.

The fume collector 1102 is in fluidic communication with a chimney 1106, which evacuates the aspirated air into the open (in the case of an extraction hood) or reintroduces the filtered air into the environment (in the case of a recirculating hood). Preferably, the hood 1101 is of the "wall-mounted" type.

Figure 2 is a sectional side view of the hood 1101. In this view one can clearly see the housing of the filter 1103 at the air inlet 1201. The air collected by the hood 1101, after having flowed through the filter 1103, as will be described in detail below, enters the air inlet 1201, being drawn therein by the air circulating means 1202. The air circulating means 1202 typically comprise at least one fan or one compressor of a known type, driven by at least one electric motor. Once it has flowed through the duct at the air circulating means 1201, the filtered air arrives at a duct in the chimney 1106 (not shown), which disposes of the filtered air in accordance with the teachings of the prior art (depending on whether an extraction hood or a recirculating hood is involved).

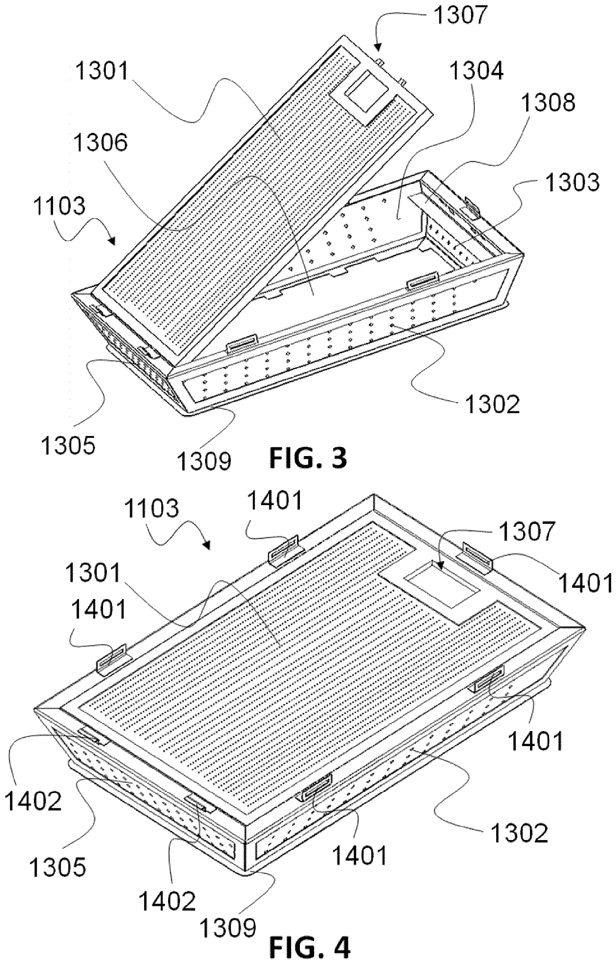

Figure 3 illustrates in detail a first embodiment of a filter, in particular of the filter 1103. The filter 1103, shown herein in the half-open configuration, comprises a flat filter element 1301 which, when the filter 1103 is installed in the hood 1101, faces towards a respective air inlet of the hood.

The flat filter element 1103 may be made from metal mesh or may be a machined surface working as a filter, and may further comprise additional elements such as filtering materials of various nature, in accordance with the teachings of the prior art.

Preferably, the flat filter element 1103, or at least a part thereof, is such that it can be washed and reconditioned by a user.

The filter 1103 further comprises four side filter elements 1302, 1303, 1304 and 1305, which are preferably flat or substantially flat. The side filter elements 1302, 1303, 1304 and 1305 are arranged on a rectangle matching the dimensions of the filter element 1301, so as to form a box-like structure, i.e. a structure substantially shaped like a parallelepiped, the side wall of which is formed by said side filter elements, while the filter element 1301 forms one of the bases.

Also the side filter elements 1302, 1303, 1304 and 1305 may be made from metal mesh or may have machined surfaces working as a filter, and may further comprise additional elements such as filtering materials of various nature, in accordance with the teachings of the prior art.

The filter 1103 further comprises a cover 1306, i.e. a non-filtering element located at the other base of the filter 1103 and adapted to close the structure. Preferably, the outer surface (not shown in the drawing) of the filter 1103 at the cover 1306 is smooth and easily washable, e.g. made of stainless steel.

The flat filter element 1301 is housed in the compartment defined by the side filter elements 1302, 1303, 1304 and 1305, and preferably lies against a support 1308. The flat filter element 1301 is held in place by suitable fastening means 1307, preferably comprising a coupling system including two small sliding pins adapted to engage with suitable seats on the support 1308.

The filter 1103 comprises, along the perimeter of the cover 1306, an edge 1309 projecting out of the side filter elements. Preferably, this edge 1309 is thicker than 5 mm and allows to prevent any greasy dirt and/or condensate possibly accumulated on the filter 1103 from falling down by gravity, i.e. from percolating onto the cooking top in the case of a range hood.

Preferably also the body of the filter 1103 can be washed by the user; in particular, it can also be washed in a dishwasher: the filter 1103 can thus be reconditioned by the user. Figure 4 illustrates the filter 1103 in the closed configuration, i.e. with the flat filter element 1301 inserted in the respective seat. The filter 1301 in the configuration shown herein is ready for use, i.e. ready to be installed into the extraction hood 1101. For installation in the hood 1101, the filter 1103 comprises suitable fastening means, which preferably include hooks 1401 arranged as follows: a pair of hooks 1401 on each one of the longer sides of the filter, and one hook 1401 on one of the shorter sides; the opposite shorter side comprises a pair of projecting hooks 1402 adapted to be inserted into a suitable pair of slots in the hood 1101, so as to allow the filter 1301 to be partially engaged while installing it.

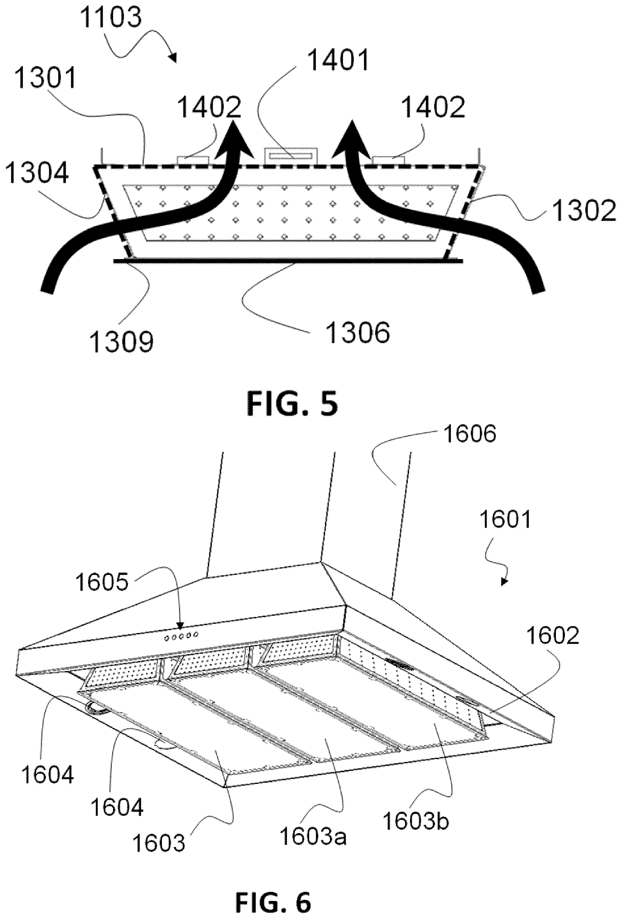

Figure 5 exemplifies the flow of air and fumes through the filter 1103, which is shown herein in a sectional side view. The dashed lines in the drawing represent air-permeable filtering surfaces such as the filter elements 1301, 1302, 1304, which surfaces are adapted to filter the aspirated fumes, in particular by retaining any greasy particles contained therein. The continuous line represents a non-filtering surface such as the cover 1306. The arrows in the drawing indicate the air flow through the filter; the air is taken in laterally through the side surface of the filter 1103, wherein it is filtered a first time. The air thus accumulated in the internal volume around the filter 1103 is then aspirated into the hood 1101 through the flat filter element 1301, wherein it is filtered a second time. The air thus filtered in the two filtering stages is cleaner from greasy particles and can be delivered to the air circulating means 1202 of the hood 1101, which as a result will get less fouled.

The filter 1103 has a flared shape, in this case with its side walls diverging upwards. The distance between the flat filter element 1301 and the cover 1306 is preferably greater than 30 mm, more preferably between 50 mm and 75 mm. The fact that the side filter elements are inclined, in this case divergent, contributes to increasing the side filtering area, the filter height being equal, thus also increasing the efficiency of the filter 1103. In fact, a larger side filtering surface allows to reduce the load losses in the filter, as well as to increase the filter air flow or to use less powerful air circulating means.

Figure 6 shows a second example of embodiment of a hood 1601.

The hood 1601 comprises a fume collector 1602 housing a plurality of filters 1603, 1603a and 1603b, each located at a respective air inlet (not shown in the drawing) of the hood 1601.

The hood 1601 further comprises lighting devices 1604 and a user interface 1605. The fume collector 1602 is in fluidic communication with a chimney 1606 for evacuating or recirculating the aspirated air. Preferably, the hood 1601 is of the "island" type, i.e. it is not wall-mounted.

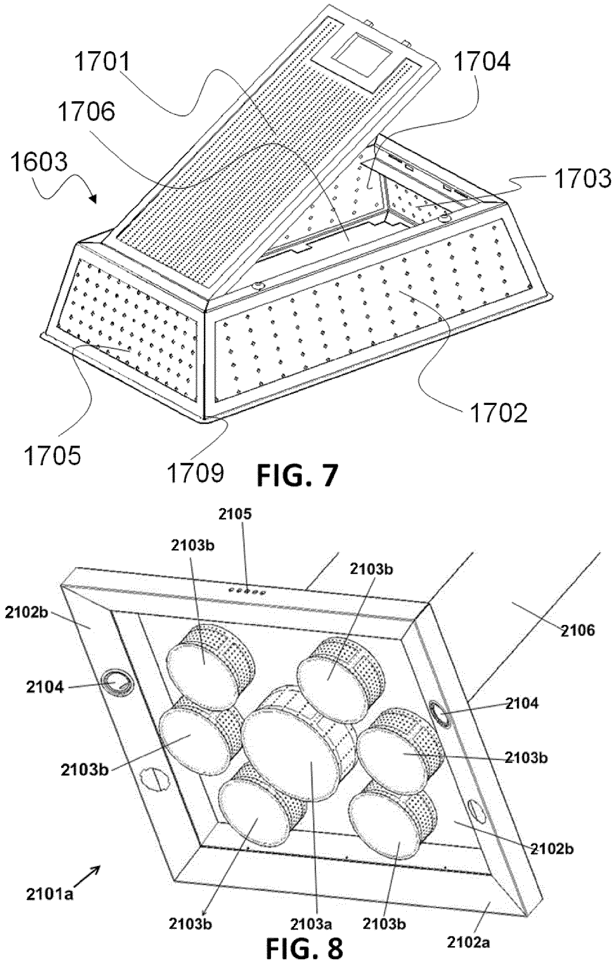

Figure 7 illustrates in detail a second embodiment of a filter, in particular of the filter 1603.

The filter 1603, which is shown herein in the half-open configuration, comprises a flat filter element 1701, preferably made from metal mesh and washable.

The filter 1603 also comprises four side filter elements 1702, 1703, 1704 and 1705, preferably flat, essentially arranged in a configuration substantially similar to that of the filter 1103, i.e. forming a box-like structure.

Also the side filter elements 1702, 1703, 1704 and 1705 are preferably made from metal mesh and washable.

The filter 1603 further comprises a non-filtering cover 1706 adapted to close the structure of the filter 1603, which cover faces towards the outside of the hood 1601 when mounted in the operating position. Preferably, also the outer surface of the cover 1706 is smooth and easily washable.

Also the filter 1603 comprises, along the perimeter of the cover 1706, an edge 1709 projecting out of the side filter elements, which prevents any greasy dirt and/or condensate accumulated on the filter 1703 from percolating downwards.

Unlike the filter 1103, the filter 1703 has upward converging side walls. In this manner, while still obtaining an equally large side filtering surface, the filtering surface will be better hidden from view by the cover 1706 when the filter is mounted in the hood 601.

At the same time, cleaning the outer surface of the filter 1603 mounted in the hood 1601 will be easier; the air flow through the filter 1603, 1603a and 1603b can be preserved by simply arranging the filters at a greater distance from each other within the collector 1602 of the hood 1601.

Further particular and advantageous aspects include:
A filter wherein the distance between the first filter element 1301 and the third closing element 1306 is greater than 30 mm, preferably between 50 mm and 75 mm.

A filter 1103 comprising a frame that supports the side wall 1302, 1303, 1304, 1305 and the third closing element 1306.

A filter wherein the first filter element 1301 comprises means 1307 for fastening it to the frame, the fastening means 1307 being operable to remove the first filter element 1301 from the frame.

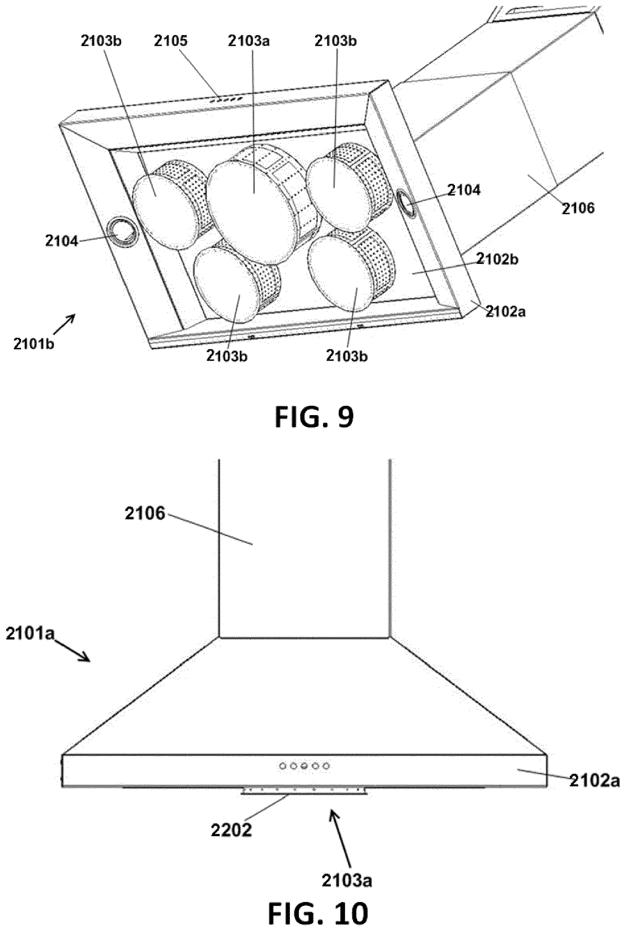

With reference to Figures 8 and 9, a hood 2101a or 2101b comprises a fume collector 2102a, 2102b housing a plurality of filters 2103a and 2103b.

The filters 2103a, 2103b are housed each at a respective air inlet of the hood, i.e. facing towards the area from where air is to be collected, e.g. the burner area in the case of a range hood.

The fume collector comprises a raised perimetric edge 2102a, and a rearward positioned panel 2102b, in which the air inlets that house the filters are obtained.

The hood 2101 also comprises lighting devices, such as spotlights 2104, and control means which, through a suitable user interface, control the operation of the hood 2101, such as the control panel 2105.

The fume collector 2102a, 2102b is connected to a chimney 2106, which evacuates the aspirated air into the open (in the case of an extraction hood) or reintroduces the filtered air into the environment (in the case of a recirculating hood).

The arrangement of the filters 2103b in the hood of Figure 8 is symmetrical around a bigger central filter 2103a, thus creating a substantially square hood, the suction power of which is symmetrical in all directions. On the contrary, the arrangement of the filters 2103b in the hood of Figure 8 is not symmetrical around the bigger central filter 2103a; in particular, the central filter 2103a is in a more advanced position towards the front edge of the hood. By changing the relative position of the central filter 2103a in the hood, one can thus increase the suction power of the hood in a particular direction.

Figure 10 is a sectional side view of the hood 2101. In this view one can clearly see the housing of the filter 2103a at the air inlet 2201. After having flowed through the filter 103 a, as will be described in detail below, the air enters the hood, being drawn therein by the air circulating means (not shown in the drawing) inside the chimney 2106. The air circulating means typically comprise at least one fan or one compressor of a known type, driven by at least one electric motor. Once it has flowed through the duct at the air circulating means, the filtered air arrives at a duct in the chimney 2106 (not shown), which disposes of the filtered air in accordance with the teachings of the prior art (depending on whether an extraction hood or a recirculating hood is involved).

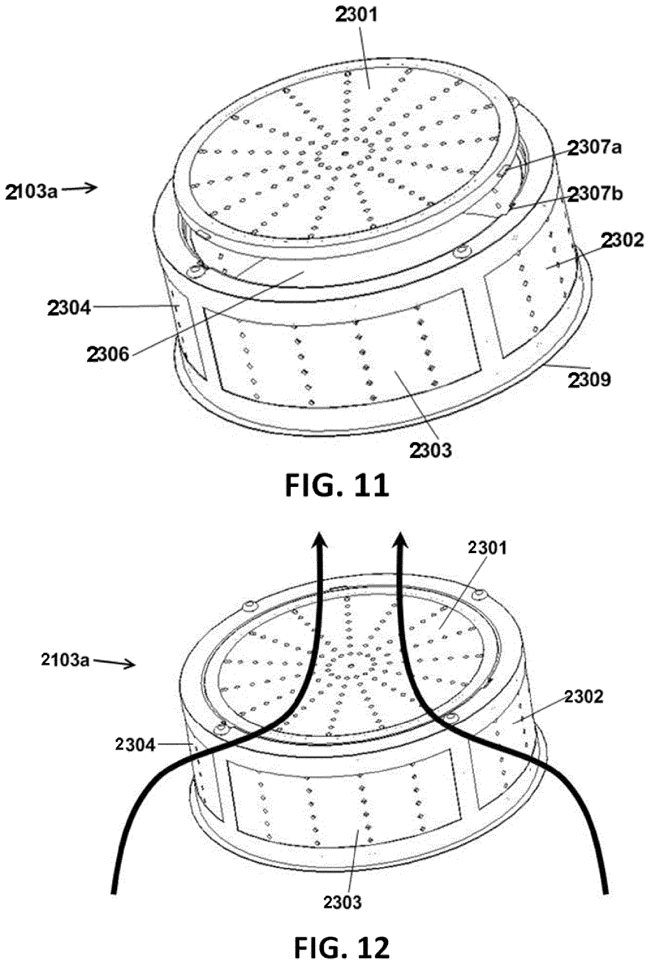

Figure 11 illustrates in detail one embodiment of a filter, in particular of the filter 2103a. The filter 2103a, which is shown herein in the half-open configuration, comprises a flat circular filter element 2301 which, when the filter 2103a is mounted in the hood 2101, faces towards a respective air inlet of the hood on the panel 2102b.

The flat filter element 2301 may be made from metal mesh or may be a machined surface working as a filter, and may further comprise additional elements such as filtering materials of various nature, in accordance with the teachings of the prior art.

Preferably, the flat filter element 2301, or at least a part thereof, is such that it can be washed and reconditioned by a user.

The filter 2103a further comprises a number of side filter elements 2302, 2303, 2304, preferably having the shape of sectors of a circle. The side filter elements 2302, 2303, 2304 are arranged on a circumference matching the dimensions of the filter element 2301, so as to form a substantially cylindrical box-like structure, the side wall of which is formed by said side filter elements, while the filter element 2301 forms one of the bases.

There may be any number of side filter elements 2302, 2303, 2304, and hence of circular sectors, with the possibility of using a single filter element covering the whole side wall. In such a case, the single circular sector will substantially match the entire side wall.

Also the side filter elements 2302, 2303, 2304 may be made from metal mesh or may have machined surfaces working as a filter, and may further comprise additional elements such as filtering materials of various nature, in accordance with the teachings of the prior art.

The filter 2103a further comprises a circular cover 2306, i.e. a non-filtering element located at the other base of the filter 2103a and adapted to close the structure. Preferably, the outer surface (not shown in the drawing) of the filter 2103 at the cover 2306 is smooth and easily washable, e.g. made of stainless steel.

The flat filter element 2301 is housed in the compartment defined by the side filter elements 2302, 2303, 2304. The flat filter element 2301 is held in place by suitable fastening means, preferably comprising protuberances 2307a adapted to rotatably engage into matching seats 2307b obtained on the upper edge of the compartment.

The filter 2103a comprises, along the perimeter of the cover 2306, an edge 2309 projecting out of the side filter elements. Preferably, this edge 2309 is thicker than 5 mm and allows to prevent any greasy dirt and/or condensate possibly accumulated on the filter 2103 from falling down by gravity, i.e. from percolating onto the cooking top in the case of a range hood.

Preferably also the body of the filter 2103 can be washed by the user; in particular, it can also be washed in a dishwasher: the filter 2103 can thus be reconditioned by the user.

The filters 2103b are substantially shaped like the filter 2103a, and may have different diameters from one another and from the filter 2103a. In the non-limiting example described herein, the filter 2103a has a bigger diameter than the filters 2103b, and the latter have all the same diameter, but other diameter combinations may also be conceived.

The cylindrical circular shape of the filters ensures optimum uniformity of suction power, and hence of load loss, in all intake directions, as well as optimal space occupation in the hood collector.

Figure 12 exemplifies the flow of air and fumes through the filter 2103a; The arrows in the drawing represent the air flow through the filter; the air is taken in laterally through the side surface of the filter 2103, thus being filtered a first time. The air thus accumulated in the internal volume around the filter 2103 is then aspirated into the hood 2101 through the flat filter element 2301, wherein it is filtered a second time. The air thus filtered in the two filtering stages is cleaner from grease particles and can be delivered to the air circulating means inside the hood 2101, which as a result will get less fouled. More in particular, the cylindrical shape of the filter makes for more efficient air circulation therewithin, with better probability of retention of greasy particles.

The height of the filter, i.e. the distance between the flat filter element 2301 and the cover 2306, is preferably greater than 30 mm, more preferably between 50 mm and 90 mm. Therefore, the height of the various filters may be different.

With reference to Figure 10, there is shown that, in a possible variant, the bottom line 2202 of the filter 2103a is lower than the bottom line of the fume collector 2102a; therefore, the filter is closer to the fume source, which is normally a cooking top. This brings the advantage of a better conveyance effect and less dispersion of the fumes drawn in from the outside, at the same reducing the adverse effect of any transverse ambient currents which might disperse said fumes.

More in general, the filters may be positioned at different heights relative to one another and/or to the bottom line of the fume collector 2102a.

Further particular and advantageous aspects of the present invention include:
A filter, wherein the third closing element 2306 comprises a stainless steel sheet. A filter wherein the distance between the first filter element 2301 and the third closing element 2306 is greater than 30 mm, preferably between 50 mm and 90 mm.

A filter 2103a, 2103b comprising a frame that supports the side wall 2302, 2303, 2304 and the third closing element 2306.

A filter wherein the first filter element 2301 comprises means 2307a, 2307b for fastening it to the frame, the fastening means being operable to remove the first filter element 2301 from the frame.

A hood wherein one or more filters 2103a, 2103b have the same or a different diameter.

A hood comprising a first one of the filters 2103a and a plurality of second filters 2103b having a smaller diameter than the first filter, arranged around the first filter, the first filter occupying a central position or a lateral position on the fume collector 2102a, 2102b.

A hood wherein one or more filters 2103a, 2103b have the same or a different height.

A hood wherein the bottom line 2202 of the first filter 2103a is lower than the bottom line of the fume collector 2102a, 2102b.

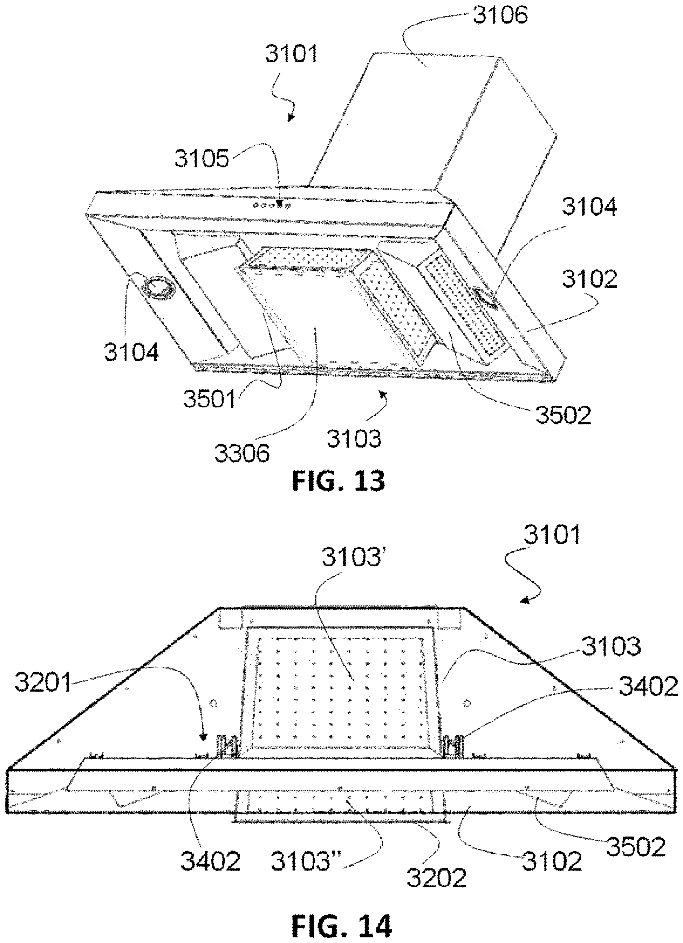

Figure 13 shows a hood 3101 according to the present invention. The hood 3101 comprises a fume collector 3102, which houses a plurality of filters 3103, 3501 and 3502 according to the present invention.

The filters 3103, 3501 and 3502 are housed each at a respective air inlet (not shown in the drawing) of the hood 3101, i.e. facing towards the area from where air is to be collected, e.g. the burner area in the case of a range hood.

The hood 3101 also comprises lighting devices, such as spotlights 3104, and control means which, through a suitable user interface, control the operation of the hood 3101, such as the control panel 3105.

The fume collector 3102 is connected to a chimney 3106, which evacuates the aspirated air into the open (in the case of an extraction hood) or reintroduces the filtered air into the environment (in the case of a recirculating hood).

Figure 14 is a sectional side view of the hood 3101. In this view one can clearly see the housing of the filter 3103 at the air inlet 3201, which comprises a panel secured to the fume collector 3102. The filter 3103 is positioned in a manner such that a part 3103' thereof is inside the hood and another part 3103" thereof is external, i.e. in an intermediate position with respect to the air inlet 3201.

The air collected by the hood 3101, after having flowed through the filter 3103, as will be described more in detail below, enters the air inlet 3201, being drawn therein by the air circulating means. The air circulating means, of a known type and not shown in the drawing, are normally arranged inside the chimney 3106 and typically comprise at least one fan or one compressor of a known type, driven by at least one electric motor. The filtered air arrives at a duct in the chimney 3106 (not shown), which disposes of the filtered air in accordance with the teachings of the prior art (depending on whether an extraction hood or a recirculating hood is involved).

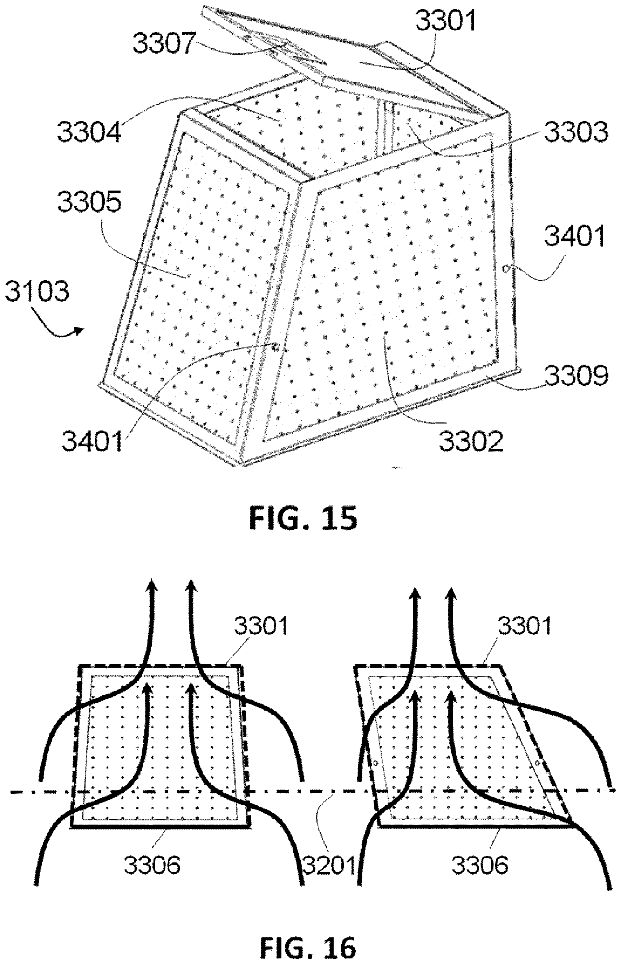

Figure 15 illustrates in detail a first embodiment of a filter according to the present invention, in particular of the filter 3103. The filter 3103, shown herein in the half-open configuration, comprises a flat filter element 3301 which, when the filter 3103 is installed in the hood 3101 through a respective air inlet of the hood, is located in an uppermost position inside the hood.

The flat filter element 3301 may be made from metal mesh or may be a machined surface working as a filter, and may further comprise additional elements such as filtering materials of various nature, in accordance with the teachings of the prior art.

Preferably, the flat filter element 3103, or at least a part thereof, is such that it can be washed and reconditioned by a user.

The filter 3103 further comprises four side filter elements 3302, 3303, 3304 and 3305, which are preferably flat or substantially flat. The side filter elements 3302, 3303, 3304 and 3305 are arranged in such a way as to form a box-like structure, said side filter elements forming the side wall thereof, whereas the filter element 3301 forms one of the bases.

Also the side filter elements 3302, 3303, 3304 and 3305 may be made from metal mesh or may have machined surfaces working as a filter, and may further comprise additional elements such as filtering materials of various nature.

The filter 3103 further comprises a cover 306, i.e. a non-filtering element located at the other base of the filter 3103 and adapted to close the structure. Preferably, the outer surface (not shown in the drawing) of the filter 3103 at the cover 3306 is smooth and easily washable, e.g. made of stainless steel. Preferably, the cover 3306 faces downwards and towards the outside of the hood 3101 when mounted in the operating position.

The flat filter element 3301 is housed in the compartment defined by the side filter elements 3302, 3303, 3304 and 3305, preferably lying on a support not shown in the drawing. The flat filter element 3301 is held in place by suitable fastening means 3307, which preferably comprise a coupling system comprising two small sliding pins adapted to engage with suitable seats on the support.

The filter 3103 comprises, along the perimeter of the cover 3306, an edge 3309 projecting out of the side filter elements. Preferably, this edge 3309 is thicker than 5 mm and allows to prevent any greasy dirt and/or condensate possibly accumulated on the filter 3103 from falling down by gravity, i.e. from percolating onto the cooking top in the case of a range hood.

Preferably also the body of the filter 3103 can be washed by the user; in particular, it can also be washed in a dishwasher: the filter 3103 can thus be reconditioned by the user.

The filter 3103 will hereafter be referred to as central filter, in that, as shown in the drawings, it occupies a central position in the hood.

With reference to Figure 14, in one possible variant the bottom line 3202 of the central filter 3103 is lower than the bottom line of the fume collector 3102. This offers the advantage of a better conveyance effect and less dispersion of the fumes drawn in from the outside, at the same time reducing the adverse affect of any transverse ambient currents which might disperse said fumes.

More in general, the height of the central filter 3103 can be determined as a function of specific design requirements of the hood in which it will be housed; one can also set the height of the outer part 3103" of the filter, particularly with respect to the bottom line of the fume collector 3102.

For installation in the hood 3101, the filter 3103 comprises suitable fastening means 3401, preferably consisting of holes located in intermediate positions on the filter posts and matching protuberances of supporting means 3402 provided on the inner edges of the air inlet panel 3201, into which the filter is inserted in a manner such that, as aforesaid, it will remain partially inside and partially outside the hood.

Figure 16 exemplifies the flow of air and fumes in the filter 3103, which is shown herein in a sectional side view. The dashed lines in the drawing represent air-permeable filtering surfaces such as the filter elements 3301, 3302, 3304, which surfaces are adapted to filter the aspirated fumes, in particular by retaining any greasy particles contained therein. The continuous line represents a non-filtering surface, such as the cover 3306.

The lower arrows in Figure 16 represent a first type of air flow through the filter 3103; the air is taken in laterally from the outside of the hood through the bottom part 3103" of the side surface of the filter 3103, under the line 3201 of the hood air inlet, thus being filtered a first time by that part of the side walls which is external to the hood. The upper arrows in Figure 16 represent a second type of air flow through the filter 3103; the air is taken in laterally from the inside of the hood through the upper part 3103' of the side surface of the filter 3103, above the line 3201 of the hood air inlet, also in this case being filtered a first time by that part of the side walls which is internal to the hood.

The air thus accumulated in the internal volume around the filter 3103 is then aspirated into the hood 3101 through the flat filter element 3301, wherein it is filtered a second time.

The air thus filtered in the two filtering stages is cleaner from greasy particles and can be delivered to the air circulating means 3202 of the hood 3101, which as a result will get less fouled.

The filter 3103 preferably has a flared shape, with the front side wall 3305 and/or the rear side wall 3303 converging upwards. The distance between the flat filter element 3301 and the cover 3306 is preferably greater than 50 mm, more preferably equal to or greater than 75 mm.

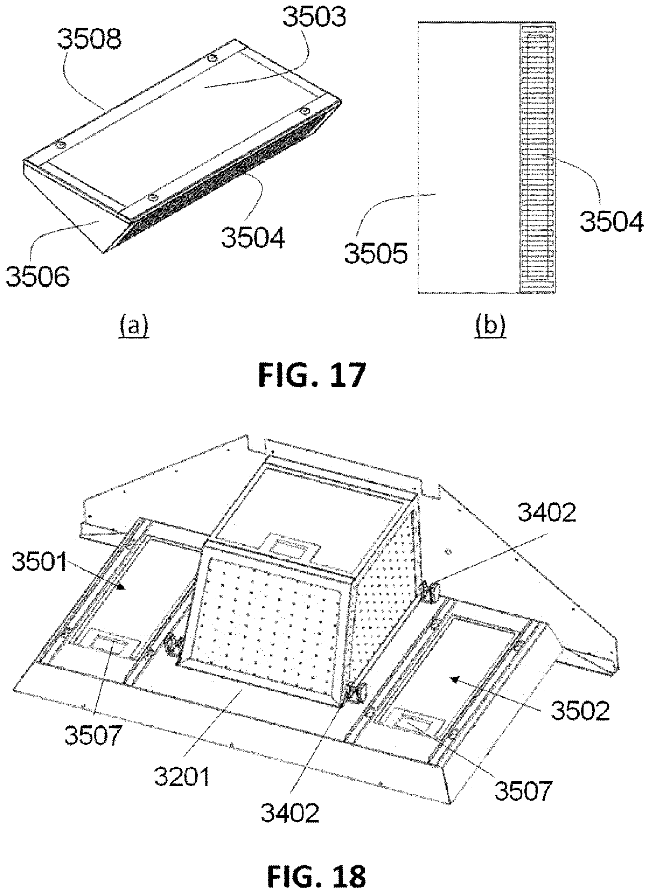

There are also further filters, hereafter referred to as side filters, which in the non-limiting example of Figures 13, 14, 17 and 18 are in a number of two, respectively designated by numerals 3501 and 3502. They are positioned laterally relative to the filter 3103, and are secured into corresponding apertures in the air inlet panel 201, in an outwardly inclined position.

Each one of said side filters has a box-like structure comprising a flat filter element 3503 which, when the filter is mounted in the hood, through a respective air inlet of the hood, is located in an uppermost position inside the hood. The filter element 3503 is removable, and is held in place in the filter by fastening means 3507, e.g. like those used for the filter element 3301 of the filter 3103. On the opposite side, the side filter has two surfaces: the first one is also a filter element 3504, whereas the second one is a non-filtering element 3505, preferably having a smooth and washable outer surface. When the side filter is installed, these two surfaces face towards the outer bottom part of the hood and have oppositely oriented inclinations: the first filtering surface 3504 faces towards the outside of the hood, while the second non-filtering surface faces towards the inside. The box-like structure is closed by two side surfaces 3506. The materials used for manufacturing the side filter may advantageously be those previously described for the filter 3103.

As far as the air flow is concerned, the air enters the side filter from the outside through the first filtering surface 3504, and exits into the hood through the flat filter element 3503. It then enters the filter 3103 through those parts of the side walls which are internal to the hood, and exits through the upper filtering part 3301, drawn by the air circulating means 3202. This provides a quadruple filtering effect. The side filters are intended to collect the peripheral air flows around the hood. In addition, the non-filtering bottom surface 3505 acts as a baffle for conveying air towards the intake of the central filter 3103.

Further particular and advantageous aspects of the present invention include:
A hood wherein one or more side filters 3501, 3502 comprise a fourth flat filter element 3503 internal to the hood.

A hood wherein the central filter 3103 and one or more side filters 3501, 3502 form box-like structures.

A hood wherein the third closing element 3306 comprises an outer edge 3309 projecting out of the side wall.

A hood wherein the first filter element 3301, the second filter elements 3302, 3303, 3304, 3305, the fourth filter element 3503, and the first filtering surface 3504 comprise a finely perforated metal structure or a metal mesh.

A hood wherein the second non-filtering surface 3505 is adapted to deflect and convey air towards the outer part of the plurality of second flat filter elements 3302, 3303, 3304, 3305. A hood wherein the position 3202 of the third non-filtering element 3306 is lower than a bottom line of the hood.

A hood wherein one or more side filters 3501, 3502 have a variable inclination, the intake direction of the first filtering surface 3504 being swiveling adjustable.

A hood wherein the inclination can be extended in such a way as to cause said one or more side filters 3501, 3502 to disappear and be completely enclosed within the hood.

The man skilled in the art may also conceive further variants of the present invention, without however departing from the protection scope as defined by the appended claims. For example, the number of side filters may be different; by way of non-limiting example, there may be four side filters, one for each side of the hood, around the central filter.

The side filters may have a variable inclination, and thus be orientable towards the intake direction of the filter element 3504. The inclination may also be extended in such a way as to cause the filter to disappear and be fully enclosed within the hood. In particular, they may be horizontally pivoted on the side 3508 opposite to the filter element 3504. Furthermore, in the side filters the top flat filter element 3503 may be absent, resulting in a simpler structure. In fact, a triple filtering effect will already be ensured by the other filter elements. In addition, the absence of the top flat filter element 3503 will allow using a less powerful motor in the hood because of the reduced load loss.

## Claims

1. A hood (3101) comprising an air inlet in fluidic connection with a chimney (3106), and air circulating means for extracting fumes from said air inlet and directing them into said chimney (3106), and further comprising one filter (3103) adapted to filter said air, said filter (3103) comprising: a first flat filter element adapted to face towards an air inlet of said hood, a plurality of second flat filter elements (3302, 3303, 3304, 3305) arranged along the perimeter of said first flat filter element to form a side wall, said side wall being adapted to extend externally to said air inlet, and a third non-filtering closing element (3306) connected to said side wall to form a box-like structure (3103), **characterized in that** said filter (3103) is a central filter, and **in that**:
- said second flat filter elements (3302, 3303, 3304, 3305) are adapted to extend partly external and partly internal to said hood, and
- said third non-filtering closing element (3306) is external to the hood;
and **in that** said hood further comprises:
- one or more side filters (3501, 3502) arranged at the sides of central filter (3103), said one or more side filters comprising a first filtering surface (3504) and a second non-filtering surface (3505), said first and second surfaces facing towards the outer bottom part of the hood and having oppositely oriented inclinations, said first filtering surface (3504) facing towards the outside of the hood, and said second non-filtering surface (3505) facing towards the inside of the hood and towards said central filter.

2. A hood (3101) according to claim 1, wherein the third closing element (3306) comprises an outer edge (3309) projecting out of said side wall.

3. A hood (3101) according to claim 1 or 2, wherein the third closing element (3306) is non-permeable to liquids and gases.

4. A hood (3101) according to claim 3, wherein said third closing element (3306) comprises a stainless steel sheet.

5. A hood (3101) according to any one of claims 1 to 4, wherein said first flat filter element and said second flat filter elements (3302, 3303, 3304, 3305) comprise a finely perforated metal structure or a metal mesh.

6. A hood (3101) according to claim 1, wherein said at least one filter is located at said air inlet, upstream of said air circulating means.

7. A hood (3101) according to claim 1, further comprising a fume collector (3102) wherein said at least one filter is located in said fume collector.

## Patentansprüche

1. Haube (3101) umfassend einen Lufteinlass in fluidischer Verbindung mit einem Abzug (3106) und Luftzirkulationsmittel zum Extrahieren von Dunst aus dem Lufteinlass und zum Leiten des Dunsts in den Abzug (3106), ferner umfassend einen Filter (3103), der zum Filtern der Luft eingerichtet ist, wobei der Filter (3103) umfasst: ein erstes flaches Filterelement, das eingerichtet ist, um in Richtung auf den Lufteinlass der Haube zu zeigen, mehrere zweite flache Filterelemente (3302, 3303, 3304, 3305), die entlang dem Rand des ersten flachen Filterelements angeordnet sind, um eine Seitenwand zu bilden, wobei die Seitenwand eingerichtet ist, um sich bis außerhalb des Lufteinlasses zu erstrecken, und ein drittes nichtfilterndes Schließelement (3306), das mit der Seitenwand verbunden ist, um eine kastenartige Struktur (3103) zu bilden, **dadurch gekennzeichnet, dass** der Filter (3103) ein zentraler Filter ist, und dadurch, dass:
- die zweiten flachen Filterelemente (3302, 3303, 3304, 3305) eingerichtet sind, um sich teilweise außerhalb und teilweise innerhalb der Haube zu erstrecken,
- das dritte nichtfilternde Schließelement (3306) außerhalb der Haube angeordnet ist;
und dadurch, dass die Haube ferner umfasst:
- ein oder mehrere Seitenfilter (3501, 3502), die an den Seiten des zentralen Filters (3103) angeordnet sind, wobei der eine oder die mehreren Seitenfilter eine erste filternde Oberfläche (3504) und eine zweite nichtfilternde Oberfläche (3505) umfassen, wobei die ersten und zweiten Oberflächen in Richtung auf die äußere Unterseite der Haube zeigen und entgegengesetzt orientierte Neigungen aufweisen, wobei die erste filternde Oberfläche (3504) in Richtung auf die Außenseite der Haube zeigt und die zweite nichtfilternde Oberfläche (3505) in Richtung auf die Innenseite der Haube und in Richtung auf den zentralen Filter zeigt.

2. Haube (3101) nach Anspruch 1, wobei das dritte Schließelement (3306) einen äußeren Rand (3309) umfasst, der über die Seitenwand übersteht.

3. Haube (3101) nach Anspruch 1 oder 2, wobei das dritte Schließelement (3306) undurchlässig für Flüssigkeiten und Gase ist.

4. Haube (3101) nach Anspruch 3, wobei das dritte Schließelement (3306) eine Edelstahlplatte umfasst.

5. Haube (3101) nach einem der Ansprüche 1 bis 4, wobei das erste flache Filterelement und das zweite flache Filterelement (3302, 3303, 3304, 3305) eine fein perforierte Metallstruktur oder ein Metallnetz umfassen.

6. Haube (3101) nach Anspruch 1, wobei mindestens ein Filter im Lufteinlass stromaufwärts der Luftzirkulationsmittel angeordnet ist.

7. Haube (3101) nach Anspruch 1, ferner umfassend einen Dunstsammler (3102), wobei der mindestens eine Filter in dem Dunstsammler angeordnet ist.

## Revendications

1. Hotte (3101) comprenant une admission d'air en raccordement fluidique avec une cheminée (3106), et un moyen de circulation d'air pour extraire des fumées de ladite admission d'air et les diriger dans ladite cheminée (3106), et comprenant en outre un filtre (3103) adapté pour filtrer ledit air, ledit filtre (3103) comprenant : un premier élément de filtre plat adapté pour être orienté vers une admission d'air de ladite hotte, une pluralité de seconds éléments de filtre plats (3302, 3303, 3304, 3305) agencés le long du périmètre dudit premier élément de filtre plat pour former une paroi latérale, ladite paroi latérale étant adaptée pour s'étendre à l'extérieur de ladite admission d'air, et un troisième élément de fermeture non filtrant (3306) raccordé à ladite paroi latérale pour former une structure de type boîte (3103), **caractérisée en ce que** ledit filtre (3103) est un filtre central, et **en ce que** :
- lesdits seconds éléments de filtre plats (3302, 3303, 3304, 3305) sont adaptés pour s'étendre en partie à l'extérieur et en partie à l'intérieur de ladite hotte, et
- ledit troisième élément de fermeture non filtrant (3306) est extérieur à la hotte ;
et **en ce que** ladite hotte comprend en outre :
- un ou plusieurs filtres latéraux (3501, 3502) agencés sur les côtés du filtre central (3103), lesdits un ou plusieurs filtres latéraux comprenant une première surface filtrante (3504) et une deuxième surface non filtrante (3505), lesdites première et deuxième surfaces étant orientées vers la partie de fond extérieure de la hotte et ayant des inclinaisons orientées à l'opposé, ladite première surface filtrante (3504) étant orientée vers l'extérieur de la hotte, et ladite deuxième surface non filtrante (3505) étant orientée vers l'intérieur de la hotte et vers ledit filtre central.

2. Hotte (3101) selon la revendication 1, dans laquelle le troisième élément de fermeture (3306) comprend un bord extérieur (3309) dépassant hors de ladite paroi latérale.

3. Hotte (3101) selon la revendication 1 ou 2, dans laquelle le troisième élément de fermeture (3306) est non perméable aux liquides et aux gaz.

4. Hotte (3101) selon la revendication 3, dans laquelle ledit troisième élément de fermeture (3306) comprend une tôle en acier inoxydable.

5. Hotte (3101) selon l'une quelconque des revendications 1 à 4, dans laquelle ledit premier élément de filtre plat et lesdits seconds éléments de filtre plats (3302, 3303, 3304, 3305) comprennent une structure en métal finement perforée ou une toile en métal.

6. Hotte (3101) selon la revendication 1, dans laquelle ledit au moins un filtre est situé au niveau de ladite admission d'air, en amont dudit moyen de circulation d'air.

7. Hotte (3101) selon la revendication 1, comprenant en outre un collecteur de fumée (3102), dans lequel ledit au moins un filtre est situé dans ledit collecteur de fumée.
